# EUROPÄISCHE PATENTSCHRIFT

(11) **EP 1 607 443 B1**
(45) Veröffentlichungstag und Bekanntmachung des Hinweises auf die Patenterteilung: **18.02.2009**
(21) Anmeldenummer: 05013039.2
(22) Anmeldetag: 16.06.2005
(51) Int. Cl.: C08L 77/00, C08L 77/02, C08L 77/06, C08L 77/10

(54) **Formteile für Kraftfahrzeuge aus einer Polymermischung aus aliphatischen Polyamiden und teilaromatischen Polyamiden**
Automotive parts made from a polymeric composition based on aliphatic polyamides and partially aromatic polyamides
Pièces automobiles à base d'une composition polymère à base de polyamides aliphatiques et de polyamides partiellement aromatiques

(30) Priorität: 16.06.2004 DE 102004029011
(43) Veröffentlichungstag der Anmeldung: 21.12.2005
(73) Patentinhaber: EMS-Chemie AG, 7013 Domat/Ems (CH)
(72) Erfinder: Liedloff, Hanns-Jörg Dr.rer.nat, 7013 Domat/Ems (CH); Schmid, Eduard Dr.sc.nat., 7402 Bonaduz (CH); Hagen, Reinhard Hans, 7013 Domat/Ems (CH)
(74) Vertreter: Pfenning, Meinig & Partner GbR

(56) Entgegenhaltungen:
- EP-A- 1 158 022
- EP-A- 1 413 604
- US-A1- 2003 125 440

## Beschreibung

Die vorliegende Erfindung betrifft Formteile für Kraftfahrzeuge aus Mischungen aus teilkristallinen aliphatischen Polyamiden und teilaromatischen Polyamiden.

Diese Formteile sind Schnellkupplungen bzw. Konnektoren für Kraftstoffleitungen, und Entlüftungsleitungen.

Zur Herstellung von Kraftstoffleitungen für Kraftfahrzeuge werden seit Jahrzehnten praktisch ausschließlich Polyamid 11 oder 12 verwendet. Dabei wurden diese Polyamide zunächst zu einfachen Monorohren verarbeitet, die allerdings den Anforderungen wegen ihrer hohen Kraftstoffpermeabilität bald nicht mehr genügten und durch Mehrschicht-Kraftfahrzeug-Rohrleitungen ersetzt wurden. Derartige Leitungen weisen eine hohe thermische Belastbarkeit, eine hohe Längenstabilität sowie eine niedrige Permeabilität nicht nur für die Hauptkomponenten der transportierten Kraftstoffe auf, sondern auch für darin vorhandene Additive und sonstige Komponenten.

Solche Leitungen sind beispielsweise in der DE 40 06 870 C1, der DE 101 10 964 A1, der EP 1 077 341 A2, im deutschen Gebrauchsmuster G 92 03 865.4 U1, in der US 5,469,892 oder in der japanische Offenlegungsschrift JP 07-308996 beschrieben. Die Gemeinsamkeit allen dort und in weiteren Patenten vorgeschlagenen technischen Lösungen besteht darin, dass die Rohre gewöhnlich mindestens aus drei Schichten aufgebaut sind, welche verschiedene Funktionen übernehmen. Eine dieser Schichten fungiert als Barriereschicht und besteht in einigen Fällen aus anderen Polymeren als Polyamid, zum Beispiel Ethylen/Vinylalkohol-Copolymeren oder elektrisch leitfähig gemachten Fluorpolymeren. Des weiteren können Haftschichten vorhanden sein, wenn z.B. die Innenschicht mit der Barriereschicht nicht verträglich ist. Von der Innenschicht wird Sour-Gas-Beständigkeit gefordert, d.h. eine hohe Resistenz gegen peroxidhaltigen Benzin. Die Außenschicht schließlich muss mechanisch stabil, verschleißfest und gegen Zinkchlorid beständig sein.

Die Möglichkeiten, welche sich zur Verbesserung der Eigenschaften von Kraftstoffleitungen durch die Kombination verschiedener Polymermaterialien in einem Materialverbund bieten, sind bei der werkstoffseitigen Optimierung der Schnellverbindungen oder Konnektoren, welche Schlauch- oder Rohrleitungen verbinden, im Allgemeinen nicht gegeben. Derartige Schnellverbindungen, wie sie sich seit langem im praktischen Einsatz ausgezeichnet bewährt haben, sind zum Beispiel in der DE 37 27 858 C2 und in der DE 38 43 995 C2 beschrieben. Bedingt durch die ansonsten sehr zweckdienliche Konstruktion dieser Schnellverbindungen ist es schlichtweg unmöglich, diese aus mehr als einem Material zu fertigen. Da für deren Herstellung wieder nur Polyamid 11 oder -12 Frage kommt, muss die im Vergleich zu den Mehrschicht-Rohrleitungen deutlich höhere Kraftstoffpermeation durch diese Schnellverbindungen in Kauf genommen werden. Es hat nun nicht an Versuchen gefehlt, diesen Mangel zu beheben. Eines dieser Konzepte bei der Neugestaltung von Schnellverbindungen ist allgemein als Monosandwich-Technologie bekannt, ein Verfahren, bei dem ein zweites Material im Kernbereich des Konnektors angebracht wird. Diese Methode ist allerdings vergleichsweise aufwändig, die Prozesskontrolle ist schwierig und nur von gut geschultem Bedienungspersonal zu beherrschen, und zudem ist auch die Verarbeitungsmaschine teurer als eine herkömmliche Spritzgießmaschine.

Mischungen aus teilaromatischen Polyamiden und aliphatischen Polyamiden sind aus der Patentliteratur bekannt. So beansprucht die EP 0 849 746 B1, die sich auf die Bereitstellung thermoplastisch umformbarer Magnetwerkstoffe bezieht, "Verfahren zur Herstellung einer thermoplastisch verarbeitbaren Formmasse aus
a) 70 bis 99 Gew.% eines teilaromatischen Copolyamids mit einem Anteil an aliphatischen Dicarbonsäuren von unter 50 Mol-% an den gesamten Säure-Monomeren und einen Schmelzpunkt von mehr als 280°C, und
b) 1 bis 30 Gew.% eines aliphatischen Polyamids oder Copolyamids mit, im statistischen Mittel, mindestens 10 CH₂-Gruppen pro -NHCO-Gruppe." Das aliphatische Polyamid ist somit im Unterschuss vorhanden.

Eine ähnliche Polyamidmischung, bei der das aliphatische Polyamid im Unterschuss enthalten ist, ist aus der EP 1 245 640 A1 bekannt.

Daher ist es die Aufgabe der vorliegenden Erfindung, Formteile mit reduzierter Kraftstoffpermeation für die Herstellung einfach zu fertigender Schnellverbindungen aber auch anderer Kraftstoffe führender Teile in Kraftfahrzeugen bereitzustellen.

Gelöst wird diese Aufgabe mit Mischungen aus den Beispielen 12 und 14.

Zur Herstellung der erfindungsgemäßen Formmassen können Ein- und vorzugsweise Doppelschneckenextruder, die eine geeignete Anordnung von Förder- und Knetelementen aufweisen, eingesetzt werden. Füllstoffe wie z.B. Glasfasern werden mittels einer separaten Dosiervorrichtung der Schmelzemischung der Polymeren zugeführt. Die Schmelzetemperatur beim Vermischen (=Compoundieren) der Komponenten im Extruder muss über dem Schmelzpunkt des teilaromatischen Polyamids liegen. Alle Mischungen besitzen eine zwei- oder mehrphasige Morphologie, was eindeutig aus Messungen mittels DSC (Differential Scanning Calorimetry) hervorgeht. Die Formteile werden daraus nach bekannten Verfahren zur Umformung von Polymerschmelzen durch Spritzguss, Extrusion, und andere Verformungstechniken hergestellt. Bei diesen Umformprozessen kann die Schmelzetemperatur im Unterschied zum Compoundiervorgang auch unter dem Schmelzpunkt des teilaromatischen Polyamids liegen. Beim Spritzgießen der Platten lag die Schmelzetemperatur in allen Fällen bei 260°C. An drei Beispielen wurde der Einfluss der Verarbeitungstemperatur (=Massetemperatur) auf die Kraftstoffpermeation untersucht, indem zusätzliche Prüfkörper bei 285°C Massetemperatur hergestellt wurden.

Die folgenden Beispiele erläutern die Erfindung, ohne sie jedoch einzuschränken.

### Beispiele

### a) Bestimmung der Physikalischen und Chemischen Eigenschaften:

Die Lösungsviskosität des verwendeten Polyamid 12, von Vorkondensat und fertigem Copolyamid wurde in 0,5 Gew.-%iger Lösung in m-Kresol bei 20°C bestimmt. Die Bestimmung der Endgruppen-Konzentrationen erfolgte mittels acidimetrischer Titration. Die Aminoendgruppen wurden in m-Kresol/iso-Propanol-2:1 (Gew.-Teile) als Lösungsmittel mit 0,1-normaler ethanolischer Perchlorsäure titriert. Die Titration der Carboxylendgruppen erfolgte in einem ortho-Kresol/Benzylalkohol-Gemisch als Lösungsmittel mit 0,1-normalem tert-Butylammoniumhydroxid.

Die DSC-Messungen wurden mit dem Gerät der Firma TA-Instruments, Typ Universal V2.3C durchgeführt.

Zur Messung der Kraftstoffpermeation wird die Permeationsrate eines Referenz-Benzins durch eine Platte mit 1 mm Dicke und Bandanguss bei 60 °C nach folgender Methode gemessen: Eine Aluminiumschale (8 cm Durchmesser, 2 cm Tiefe) wird ungefähr zur Hälfte mit dem Referenz-Benzin gefüllt. Die Schale wird mit der Probeplatte abgedeckt und diese wird dicht festgeschraubt. Das Gesamtgewicht (Schale, Benzin, Probeplatte) wird gewogen und die Probe wird in einen Umluftofen bei 60 °C (+- 2 °C) gestellt. Je nach Geschwindigkeit der Permeation wird das Gesamtgewicht von Zeit zu Zeit nachgemessen bis festgestellt wird, dass sich dieses regelmäßig erniedrigt und somit eine konstante Permeationsrate erreicht ist. Aus dem Gewichtsverlust pro Zeit sowie der Fläche der Probe wird die Permationsrate in g/m²*24h berechnet. Es wird immer eine Doppelbestimmung durchgeführt.
Als Referenz-Benzins wurde CEC Legislative Fuel RF-08-A-85 verwendet, das von der Firma Haltermann GmbH in Hamburg (D) hergestellt und vertrieben wird.

### b) Codes für die verwendeten Polymere und Additive

**A:** Polyamid 12: Hitzestabilisiertes Polyamid 12, das durch Einarbeitung eines Hitzestabilisators in Grilamid^{®} L22A, ein amingeregeltes, hochviskoses Polyamid 12 mit einer relativen Viskosität von 2,1 und einer NH₂- bzw. COOH-Endgruppenkonzentration von 56 bzw. 10 meq/kg. (Herstellung und Vertrieb von Grilamid^{®} L22A EMS-Chemie AG; Domat/Ems (CH))
**B:** Grivory^{®} HT XE 3733 NK: Polyamid 6T/6I mit 70 Mol-% Hexamethylen-terephthalamid- und 30 Mol-% Hexamethylenisophthalamid-Einheiten, einer relativen Viskosität von 1,55 und einem DSC-Schmelzpunkt von ca. 325°C (Herstellung und Vertrieb durch die EMS-Chemie AG (CH))
**C:** Grivory^{®} HT XE 3774 NK: Polyamid 6T/66 mit 55 Mol- % Hexamethylen-terephthalamid- und 45 Mol-% Hexamethylenadipamid-Einheiten, einer relativen Viskosität von 1,76 und einem DSC-Schmelzpunkt von 310°C. (Herstellung und Vertrieb durch die EMS-Chemie AG (CH))
**D:** Grivory^{®} G21: Amorphes Polyamid 6I/6T mit 67 Mol-% Hexamethylen-isophthalamid- und 33 Mol-% Hexamethylenterephthalamid-Einheiten und einer relativen Viskosität von 1,53. (Herstellung und Vertrieb durch die EMS-Chemie AG (CH))
**E:** Polyamid 6T/6I/12:Mit 62 Mol-% Hexamethylenterephthalamid-, 15 Mol-% Hexamethylenisophthalamid-Einheiten und 23 Mol-% Einheiten der Formel -NH-(CH₂)₁₁-CO-; einer relativen Viskosität von 1,660 und einem DSC-Schmelzpunkt von 306°C.
**F:** Polyamid 6T/66/12: Mit 46 Mol-% Hexamethylenterephthalamid-, 46 Mol-% Hexamethylenadipamid-Einheiten und 8 Mol-% Einheiten der Formel -NH-(CH₂)₁₁-CO-; einer relativen Viskosität von 1,678 und einem DSC-Schmelzpunkt von 289°C.
**G:** Surlyn 9020: Ionomer (Zink-Typ) (Herstellung und Vertrieb durch die Du Pont)
**H:** Antioxidant auf Basis von CuJ und KJ
**J:** Haftmittel Tween20

### c) Herstellung der teilaromatischen Polyamide E und F

Beide Produkte wurden nach einem mehrstufigen Verfahren hergestellt. Die Vorkondensatherstellung wurde nach dem in der US-PS 5,708,125 beschriebenen Verfahren durchgeführt, die Nachkondensation in der Schmelze entsprach unter anderem dem in der US-PS 4,831,108 beschriebenen Verfahren.

In der ersten Stufe wird zunächst bei 190°C eine wässrige Lösung der Komponenten mit 29 Gew.-% Wasser in einem mit Stickstoff inertisierbaren, gerührten Druckgefäß (V = 20 ltr) hergestellt. Bei dieser Temperatur wird zwei Stunden gerührt, bis sich ein Druck von etwa 1,0 MPa eingestellt hat. Nach Beendigung dieser Stufe wird die Lösung aus dem Vorlagegefäß unter Druck in einen 20 ltr-Rührautoklaven abgelassen und dort auf 260°C aufgeheizt, wobei durch wiederholtes Öffnen eines Abgasventils der Druck bei 3,3 MPa gehalten wird. Sobald nach etwa 2 Stunden - auch ohne weitere Betätigung des Ventils - der Druck konstant bleibt, wird das Bodenventil geöffnet und die Vorkondensat-Lösung abgelassen und in einen Zyklon versprüht. Dabei verdampft ein Grossteil des Wassers und es bleiben unregelmäßig geformte Partikel des betreffenden Vorkondensats zurück, die bei 80°C im Vakuum getrocknet und anschließend zu einem Pulver vermahlen werden.

Zur Erzeugung der hochmolekularen Copolyamide werden die Vorkondensate in der Schmelze in einem gleichläufigen Doppelschneckenextruder vom Typ ZSK 25 (Fabrikat der Fa. Werner & Pfleiderer; Stuttgart, D) unter folgenden Bedingungen nachkondensiert. Die hochviskose Polymerschmelze wird als Strang abgezogen, abgekühlt und granuliert.
- Vorkondensatdosierung und -durchsatz: 4 kg/h
- Schneckendrehzahl: 100 UPM
- Temperaturen (Zone 1-12): 0/40/100/300/350/370/370/ 370/370/370/360/330 und 330°C
- Entgasung: Zone 10 und Zone 11 unter N₂
- Trocknung des Granulats: 24 Stunden bei 100°C im Vakuum

Für die Herstellung von jedem der zwei Polyamide wurden 3 Vorkondensat-Chargen von jeweils etwa 7 kg hergestellt und diese vor der Nachkondensation vermischt. Die Ergebnisse der Analysen an den Vorkondensatchargen und den fertigen Polymeren finden sich in Tabelle 3. Die benutzten Abkürzungen zeigt Tabelle 1.

**Tabelle 1: Abkürzungen**

| | |
|---|---|
| TPS | Terephthalsäure |
| HMD | Hexamethylendiamin |
| IPS | Isophthalsäure |
| ADS | Adipinsäure |
| ALS | T-Aminolaurinsäure |
| BZS | Benzoesäure |
| NHP | Natriumhypophosphit (NaH₂PO₂-Monohydrat) |
| WW | Weichwasser |
| RV | Relative Lösungsviskosität in 0,5%-iger Lösung in m-Kresol bei 20°C |
| [C] | Carboxylendgruppenkonzentration in meq/kg |
| [A] | Aminoendgruppenkonzentration in meq/kg |
| SMP | DSC-Schmelzpunkt (°C) |

**Tabelle 2: Rezepturen**

| Polyamid | Rohstoffe [g] | | | | | | | |
|---|---|---|---|---|---|---|---|---|
| | TPS | IPS | ADS | HMD*) | ALS | BZS | NHP | WW |
| **E** | 2791 | 658 | _ | 2425 | 1310 | 28 | 2,1 | 3300 |
| **F** | 1990 | _ | 1749 | 2923 | 448 | 26 | 2,1 | 3250 |

| | | | | | | | | |
|---|---|---|---|---|---|---|---|---|
| *) jeweils 2 %-iger Überschuss | | | | | | | | |

In Tabelle 4 sind die Ergebnisse der Permeationsmessungen an den erfindungsgemäßen Mischungen und an den Vergleichsprodukten aufgeführt. Die Mischungen wurden mit einem Doppelschneckenextruder vom Typ ZSK 30 (Fabrikat der Fa. Werner & Pfleiderer; Stuttgart, D) hergestellt. Alle Produkte wurden mit einer Spritzgießmaschine vom Typ NETSTAL Neomat 235/90 Sycap (Fabrikat der Firma NETSTAL in Näfels (CH)) zu 1 mm dicken Platten mit 100 mm Kantenlänge und Bandanguss verarbeitet. Die Massetemperatur betrug durchgängig 260°C, in einigen Fällen wurden die Platten auch bei 285°C hergestellt.

**Tabelle 3: Relative Viskositäten, Endgruppen und DSC-Schmelzpunkte**

| Polyamid | Vorkondensat (getrocknet) | | | | Polymer | |
|---|---|---|---|---|---|---|
| | Charge | RV | [ A ] | [ C ] | RV | SMP |
| E | 1 | 1,127 | 788 | 812 | | |
| | 2 | 1,143 | 900 | 915 | 1.660 | 306 |
| | 3 | 1,145 | 950 | 962 | | |
| F | 1 | 1,175 | 850 | 720 | | |
| | 2 | 1,173 | 913 | 709 | 1,678 | 289 |
| | 3 | 1,187 | 798 | 680 | | |

In Tabelle 5 sind die Permeationswerte der bei 260 und 285°C verarbeiteten Produkte zusammengestellt. Ein signifikanter Einfluss der Massetemperatur auf die Kraftstoffpermeabilität zeigt sich vor allem bei den Produkten, die neben dem hochschmelzenden teilaromatischen Polyamid noch ein amorphes Polyamid in der dispergierten Phase enthalten. Die Permeation nimmt dort mit steigender Verarbeitungstemperatur stark zu, während sie bei dem Produkt, das nur ein hochschmelzendes teilaromatisches Polyamid enthält, durch die Verarbeitungstemperatur kaum beeinflusst wird. Wahrscheinlich ist dieser Effekt darauf zurückzuführen, dass mit einer Erhöhung der Massetemperatur die Dispersion der amorphen, schmelzbaren Komponente in der Polyamid 12-Matrix in der Weise verändert wird, dass kleinere Partikel der dispergierten Komponente zusammenfließen und so größere Polymertröpfchen bilden, die in Bezug auf die Barriereeigenschaften der Mischungen eine verringerte Wirkung aufweisen. Es kann nicht entschieden werden, ob diese Partikel überwiegend aus dem amorphen teilaromatischen Polyamid bestehen oder aus einer Mischung des amorphen und des teilkristallinen teilaromatischen Polyamids im vorgegebenen Mischungsverhältnis.

**Tabelle 4: Kraftstoffpermeabilität der Mischungen bei 60°C [g/m²*24 Std] (Haltermann Referenz-Benzin CEC Legislative Fuel RF-08-A-85)**

| Beispiel | Komponenten der Mischungen (Gewichtsteile) | | | | | | | | | Permeation |
|---|---|---|---|---|---|---|---|---|---|---|
| | **A** | **B** | **C** | **D** | **E** | **F** | **G** | **H** | **J** | |
| Vergleich | 99,65 | | | | | | | 0,35 | 0,04 | 2,49 |
| (Polyamid 12) | | | | | | | | | | |
| 1 | 76,65 | 23 | | | | | | 0,35 | 0,04 | 0,72 |
| 2 | 62,65 | 37 | | | | | | 0,35 | 0,04 | 0,26 |
| 3 | 76,65 | | 23 | | | | | 0,35 | 0,04 | 0,82 |
| 4 | 68,65 | 23 | | | | | 8 | 0,35 | 0,04 | 2,64 |
| 5 | 50,65 | 37 | | | | | 12 | 0,35 | 0,04 | 2,85 |
| 6 | 68,65 | | 23 | | | | 8 | 0,35 | 0,04 | 1,97 |
| 7 | 50,65 | | 37 | | | | 12 | 0,35 | 0,04 | 0,7 |
| 8 | 69,65 | 30 | | | | | | 0,35 | 0,04 | 0,40 |
| 9 | 62,65 | 25 | | 12 | | | | 0,35 | 0,04 | 0,19 |
| 10 | 62,65 | 20 | | 17 | | | | 0,35 | 0,04 | 0,14 |
| 11 | 62,65 | | | | 38 | | | 0,35 | 0,04 | 0,25 |
| 12* | 52,75 | | | | 46,9 | | | 0,35 | 0,04 | 0,056 |
| 13 | 75 | | | | | 24,65 | | 0,35 | 0,04 | 0,45 |
| 14* | 60 | | | | | 39,65 | | 0,35 | 0,04 | 0,043 |

| | | | | | | | | | | |
|---|---|---|---|---|---|---|---|---|---|---|
| *erfindungsgemäß | | | | | | | | | | |

Die Beispiele 4-7 repräsentieren schlagzähmodifierte Mischungen. Schlagzähmodifikator ist ein Ionomer. Diese Mischungen demonstrieren gleichzeitig den negativen Effekt des Copolyolefins auf die Kraftstoffpermeabilität.

**Tabelle 5: Einfluss der Verarbeitungstemperatur auf die Kraftstoffpermeabilität bei 60°C [g/m²*24 Std]**

| Beispiel | Verarbeitungs-temperatur [°C] | Permeation |
|---|---|---|
| 8 | 260 | 0,40 |
| 8-1 | 285 | 0,39 |
| 9 | 260 | 0,19 |
| 9-1 | 285 | 0,27 |
| 10 | 260 | 0,14 |
| 10-1 | 285 | 0,18 |

## Patentansprüche

1. Formteile für Kraftfahrzeuge ausgewählt aus Schnellkupplungen, Konnektoren für Kraftstoffleitungen, und Entlüftungsleitungen, aus einer Polymermischung aus 52,75 Gew.-% Polyamid 12 und 46,9 Gew.-% teilaromatischem Polyamid, wobei das teilaromatische Polyamid das ternäre teilkristalline Polyamid 6T/6I/12 mit 62 Mol-% Hexamethylenterephthalamid- und 15 Mol-% Hexamethylenisophthalamid-Einheiten und 23 Mol-% Einheiten der Formel -NH-(CH₂)₁₁-CO- ist, oder aus einer Polymermischung aus 60 Gew.-% Polyamid 12 und 39,65 Gew.-% teilaromatischem Polyamid, wobei das teilaromatische Polyamid das ternäre teilkristalline Polyamid 6T/66/12 mit 46 Mol-% Hexamethylenterephthalamid- und 46 Mol-% Hexamethylenadipamid-Einheiten und 8 Mol-% Einheiten der Formel -NH-(CH₂)₁₁-CO- ist, wobei die Polymermischungen jeweils 0,35 Gew.-% eines Antioxidans auf Basis von Cu und KJ, und 0,04 Gew.-% eines Haftmittels enthalten.

## Claims

1. Moulded parts for motor vehicles, selected from quick couplings, connectors for fuel lines, and vent lines, made from a polymer mixture comprising 52.75 wt.% of polyamide 12 and 46.9 wt.% of partially aromatic polyamide, wherein the partially aromatic polyamide is the ternary, partially crystalline polyamide 6T/6I/12 with 62 mol% of hexamethylene terephthalamide units and 15 mol% of hexamethylene isophthalamide units and 23 mol% of units of the formula -NH-(CH₂)₁₁-CO-, or made from a polymer mixture comprising 60 wt.% of polyamide 12 and 39.65 wt.% of partially aromatic polyamide, wherein the partially aromatic polyamide is the ternary, partially crystalline polyamide 6T/66/12 with 46 mol% of hexamethylene terephthalamide units and 46 mol% of hexamethylene adipamide units and 8 mol% of units of the formula -NH-(CH₂)₁₁-CO-, wherein the polymer mixtures each contain 0.35 wt.% of an antioxidant based on Cu and KJ, and 0.04 wt.% of an adhesive.

## Revendications

1. Pièces moulées pour véhicules automobiles sélectionnées parmi les raccords rapides, les connecteurs pour conduites de carburant, et les conduites de purge d'air, en un mélange de polymères composé de 52,75 % en poids de polyamide 12 et de 46,9 % en poids de polyamide partiellement aromatique, le polyamide partiellement aromatique étant le polyamide ternaire semi-cristallin 6T/6I/12 avec 62 % en mol d'unités d'hexaméthylènetéréphtalamide et 15 % en mol d'unités d'hexaméthylèneisophtalamide et 23 % en mol d'unités de la formule -NH-(CH₂)₁₁-CO-, ou en un mélange de polymères composé de 60 % en poids de polyamide 12 et de 39,65 % en poids de polyamide partiellement aromatique, le polyamide partiellement aromatique étant le polyamide ternaire semi-cristallin 6T/66/12 avec 46 % en mol d'unités d'hexaméthylènetéréphtalamide et 46 % en mol d'unités d'hexaméthylèneadipamide et 8 % en mol de la formule -NH-(CH₂)₁₁-CO-, les mélanges de polymères contenant respectivement 0,35 % en poids d'un antioxydant à base de Cu et de KJ, et 0,04 % en poids d'une substance d'adhérence.
